# FASCICULE DE BREVET EUROPEEN

(11) **EP 4 554 746 B1**
(45) Date de publication et mention de la délivrance du brevet: **02.09.2026**
(21) Numéro de dépôt: 23739573.6
(22) Date de dépôt: 10.07.2023
(51) Int. Cl.: B23B 35/00, B23Q 17/09, G05B 19/416

(54) **TECHNIQUE DE PERÇAGE UTILISANT DES MOTEURS À COMMANDE ADAPTATIVE**
BOHRTECHNIK MIT ADAPTIVEN MOTORENSTEUERUNG
DRILLING TECHNIQUE USING ADAPTIVE CONTROL MOTORS

(30) Priorité: 12.07.2022 FR 2207174
(43) Date de publication de la demande: 21.05.2025
(73) Titulaire: Seti-Tec, 77090 Collégien (FR)
(72) Inventeur: MARTINEAU, Emmanuel, 85260 HERBERGEMENT (FR); PETIT, Etienne, 77500 CHELLES (FR)
(74) Mandataire: Vidon Brevets & Stratégie
(86) Numéro de dépôt international: PCT/EP2023/069063
(87) Numéro de publication internationale: WO 2024/013107

(56) Documents cités:
- AU-A1- 2020 205 243
- US-A1- 2018 119 536

## Description

### 1. Domaine de l'invention

Le domaine de l'invention est celui des procédés et dispositifs de perçage mise en œuvre pour réaliser le perçage d'éléments à percer, notamment constitués d'un empilement de couches de matières différentes.

### 2. Art antérieur

Des perçages sont couramment réalisés au moyen de dispositifs de perçage, notamment dans le domaine de l'aéronautique, pour réaliser des trous au travers d'éléments à percer qui peuvent parfois être constitués par l'empilement de plusieurs couches de matières différentes.

Au cours de la réalisation du perçage d'un élément, il peut être nécessaire, pour optimiser le perçage, de faire varier les conditions de coupe. Ceci peut par exemple être le cas :
- lorsque l'élément à percer est constitué par un empilement de couches de matières différentes qui supposent chacune d'être percées avec des conditions de coupe adaptées notamment de sorte à assurer la qualité du perçage, éviter la détérioration de l'outil de coupe;
- lors du perçage d'un trou à faible conicité, destiné à recevoir une vis de type « taperlock » en langue anglaise, au moyen d'un outil coupant conique dans la mesure où la quantité de matière enlevée, et par la même les efforts de coupe, croissent avec la profondeur du perçage ;
- lors d'un perçage - fraisurage où l'outil coupant comporte une première partie cylindrique suivie d'une partie conique, le perçage commence par la réalisation du perçage cylindrique jusqu'à ce que l'outil coupant débouche de la paroi, puis l'avance de l'outil coupant se poursuivant, la partie conique de l'outil coupant vient réaliser une fraisure sur l'entrée du trou ;
- lors d'un perçage sous lubrification, l'injection de lubrifiant peut être involontairement variable faute d'une parfaite maitrise et/ou pour des raisons inconnues si bien que son effet est également variable ce qui engendre une variation des efforts de coupe et donc une nécessité d'adapter idéalement en conséquence les conditions de coupe pour garantir la qualité du perçage et préserver l'état de l'outil de coupe et de la perceuse ;
- les efforts de coupe varient selon le niveau de frottements des listels de l'outil coupant ce qui engendre une variation des efforts de coupe et donc une nécessité d'adapter idéalement en conséquence les conditions de coupe pour garantir la qualité du perçage.

La survenue de divers événements au cours de la réalisation d'une opération de perçage d'un élément à percer constitué ou non d'un empilement de plusieurs couches de matières différentes, peut ainsi induire la nécessité de modifier en cours de perçage les conditions de coupe pour optimiser le perçage en terme de qualité et/ou de préservation du matériel mis en œuvre à cet effet.

Le document AU-A1-2020205243 décrit par exemple une technique permettant de déclencher un débourrage d'un trou en cours de perçage lorsque la vitesse d'avance du foret devient inférieure à un seuil prédéterminé.

Les paramètres de coupe sont généralement :
- la vitesse tangentielle des becs de l'outil coupant et la fréquence de rotation de l'outil coupant en tr/mn ;
- la vitesse d'avance de l'outil coupant en mm/mn ;
- l'avance par tour en mm/tour qui traduit un lien de proportionnalité entre la fréquence de rotation et la vitesse d'avance de l'outil coupant.

Dans ce dessein notamment, les perceuses dites à paramètres de coupe contrôlées ont été développées.

Une perceuse de ce type peut par exemple comprendre un moteur d'avance et un moteur de coupe, en général synchrones à aimants permanents, qui sont reliés, au moyen d'une transmission, à une broche mobile en rotation et en translation suivant un même axe et susceptible d'entrainer en mouvement un outil de coupe.

Cette transmission peut, dans certains cas, être configurée de manière telle que :
- la fréquence de rotation de l'outil de coupe est proportionnelle à la fréquence de rotation du moteur de coupe ;
- la vitesse d'avance de l'outil de coupe est proportionnelle à la fréquence de rotation du moteur d'avance.

Le document de brevet FR-B1-3 000 693 décrit une perceuse de ce type.

Au cours d'une opération de perçage, un outil coupant subi différents efforts de coupe, à savoir :
- le couple de coupe ;
- la poussée axiale ;
- les frottements sur les listels contribuant au couple et à la poussée, importants pour les outils coupants coniques et moindre pour les outils coupants standards.

Une perceuse à paramètres de coupe contrôlés peut également comprendre des moyens pour évaluer tout ou partie de ces efforts, notamment des moyens de mesure d'une valeur de charge représentative du couple et/ou de la poussée appliquée sur l'outil coupant. De tels moyens de mesure peuvent notamment être tels que ceux décrits par exemple dans le document de brevet FR-B1-3 058 342.

La valeur de charge sur le foret (aussi appelé outil de coupe ou outil coupant) mesurée peut notamment être :
- la mesure d'un capteur de couple placé sur la transmission entre le moteur de coupe de l'outil coupant et l'outil coupant traduisant le couple appliqué sur l'outil coupant ;
- la mesure d'un capteur d'effort placé sur la broche traduisant la poussée axiale sur l'outil coupant ;
- la mesure de la puissance ou d'intensité consommée par le moteur de coupe de l'outil coupant, traduisant le couple appliqué sur l'outil coupant (en prenant en compte le ratio de transmission dans le cas de perceuse bi-vitesse) ;
- la mesure de la puissance ou d'intensité consommée par le moteur d'avance de l'outil coupant, traduisant la poussée appliquée sur l'outil coupant.

Une perceuse à paramètres de coupe contrôlés peut également comprendre des moyens de contrôle et d'alimentation des moteurs.

Ces moyens d'alimentation permettent une régulation des moteurs en vitesse avec des consignes de vitesse prédéterminées.

Les moyens de contrôle sont aptes à piloter le perçage de manière telle que les paramètres de coupe utilisés soient adaptés aux matières rencontrées au cours d'un perçage. Lors du perçage d'un élément comprenant l'empilement de couches de matières différentes, il se peut que la nature des couches et leur ordre d'empilement soient connus. Dans ce cas, le suivi de la charge sur le foret permet de détecter les changements de matières et d'adapter en conséquence les conditions de coupe. Lorsque les matières à percer sont connues mais pas leur ordre d'empilement, il convient d'utiliser un algorithme apte à détecter les changements de matière et à identifier la nature de la nouvelle matière rencontrée. Le document de brevet FR-B1-3058342 propose une méthode le permettant.

Au cours de la réalisation d'une opération de perçage de la ou de chaque matière d'un élément à percer, il est souhaitable que les efforts de coupe restent stables et modérés pour éviter un échauffement excessif de l'outil de coupe, de l'élément à percer et de la perceuse et ainsi préserver leur durée de vie et la qualité des trous.

Le document de brevet FR-B1-3 058 342 décrit une méthode de contrôle pour adapter de façon automatique les paramètres de coupe aux différentes matières rencontrées au cours du perçage d'un élément constitué de l'empilement de plusieurs couches de matières différents.

Cette technique est intéressante en ce qu'elle permet de maitriser les efforts de coupe résultant du perçage successif de matières différentes.

Toutefois, cette technique est complexe à mettre en œuvre et n'est pas adaptée à la gestion d'une variation continue des efforts de coupe découlant non pas d'un changement de matière mais de l'usage d'un foret conique ou d'une dégradation des conditions de coupe en cours de perçage due par exemple à une lubrification variable, un bourrage de copeaux...

En ce sens, les techniques de perçage de matériaux multicouches ou non peuvent encore être améliorées.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir une technique de perçage qui permet d'optimiser un perçage.

Notamment, l'invention a pour objectif, selon au moins un mode de réalisation, de fournir une telle technique qui contribue à optimiser un perçage en s'adaptant aux divers problèmes susceptibles d'être rencontrés au cours de la réalisation de celui-ci.

Un autre objectif de l'invention est, selon au moins un mode de réalisation, de fournir une telle technique qui permet de réagir de manière réactive à la survenue d'un événement au cours d'une opération de perçage pour optimiser sa réalisation.

Un autre objectif de l'invention est, selon au moins un mode de réalisation, de fournir une telle technique qui soit simple.

### 4. Présentation de l'invention

Pour ceci, l'invention propose un procédé selon la revendication 1 de perçage d'un élément à percer au
moyen d'un outil coupant susceptible d'être entrainé en rotation et en translation suivant un même axe par un dispositif de perçage, ledit dispositif comprenant :
- un moteur de coupe apte à induire un mouvement de rotation dudit outil coupant suivant ledit axe ;
- un moteur d'avance apte à induire un mouvement de translation dudit outil coupant suivant ledit axe ;
   ledit procédé comprenant au moins :
- une étape de mesure d'un couple appliqué audit outil coupant suivant ledit axe ;
- une étape de mesure d'une poussée appliquée audit outil coupant suivant ledit axe ;
- une étape de comparaison dudit couple à un seuil prédéterminé de couple C ;
- une étape de comparaison de ladite poussée à un seuil prédéterminé de poussée P ;
- une étape d'adaptation de la régulation desdits moteurs, ladite étape d'adaptation induisant que :
   - lesdits moteurs de coupe et d'avance sont régulés en vitesse tant que
      ledit couple et ladite poussée sont inférieurs respectivement audit seuil de couple C et audit seuil de poussée P ;
   - lorsque ledit couple ou ladite poussée atteint ou dépasse ledit seuil de couple C ou de poussée P, le moteur générant le couple ou la poussée dont le seuil est dépassé est régulé en courant, l'autre moteur restant régulé en vitesse de manière telle que l'avance par tour dudit outil coupant soit égale à une valeur prédéterminée ATR.

Ainsi, l'invention consiste à mesurer au cours d'une opération de perçage le couple et la poussée appliquée à l'outil de coupe et à réguler en vitesse les moteurs de rotation et d'avance tant que le couple et la poussée restent en dessous de seuils prédéterminés. Puis, lorsque le couple ou la poussée dépasse un seuil prédéterminé, le moteur générant la grandeur dont le seuil limite a été dépassé, i.e. le moteur de coupe pour le couple et le moteur d'avance pour la poussée, est régulé en couple alors que l'autre moteur demeure régulé en vitesse de manière telle que l'avance par tour du foret ait une valeur prédéterminée.

Cette approche permet, en temps réel, d'adapter les conditions de coupe lors de la survenue d'événements en cours de perçage induisant une augmentation du couple ou de la poussé au-delà de valeurs acceptables. Ainsi, l'invention permet d'optimiser la réalisation d'un perçage et d'en augmenter la qualité tout en préservant le matériel (outil coupant et perceuse) mis en œuvre à cet effet.

La technique selon l'invention peut indifféremment être mise en œuvre dans le cadre du perçage d'un élément mono matériau ou d'un élément comprenant un empilement d'une pluralité de couches de matières différentes.

Selon une caractéristique possible, ladite étape d'adaptation de la régulation, lorsque l'un des moteurs est régulé en courant, comprend une étape de détermination d'une consigne de fréquence de rotation dudit moteur régulé en vitesse en fonction de la fréquence de rotation dudit moteur régulé en courant.

Selon une caractéristique possible, lesdits moteurs de coupe et d'avance sont initialement régulés en vitesse selon des fréquences de rotation initiales. Ceci en particulier lors de la phase d'approche du foret de la pièce à percer.

Selon une caractéristique possible, lorsque ledit couple atteint ledit seuil de couple (C), ladite étape d'adaptation de ladite régulation comprend les premières sous-étapes suivantes :
- régulation en courant dudit moteur de coupe de telle sorte que ledit couple ne dépasse pas ledit seuil de couple (C) ;
- mesure d'une nouvelle fréquence de rotation (N") dudit moteur de coupe ;
- détermination d'une nouvelle fréquence rotation (V") dudit moteur d'avance telle que l'avance par tour dudit outil coupant soit égale à ladite valeur prédéterminée (ATR) ;
- régulation dudit moteur d'avance de façon qu'il soit entrainé à ladite nouvelle fréquence de rotation (V").

Selon une caractéristique possible, lorsque ladite poussée atteint ledit seuil de poussée (P), ladite étape d'adaptation de ladite régulation comprend les deuxièmes sous-étapes suivantes :
- régulation dudit moteur d'avance de telle sorte à ce que ladite poussée ne dépasse pas ledit seuil prédéterminé de poussée (P) ;
- mesure d'une nouvelle fréquence de rotation (V") dudit moteur d'avance ;
- détermination d'une nouvelle fréquence (N") de rotation dudit moteur de coupe telle que l'avance par tour dudit outil coupant soit égale à ladite valeur prédéterminée (ATR) ;
- régulation dudit moteur de coupe de façon qu'il soit entrainé à ladite nouvelle fréquence de rotation (N").

Selon une caractéristique possible, ladite avance par tour prédéterminée (ATR) dudit outil coupant est :
- constante, ou
- déterminée en fonction de la fréquence de rotation dudit outil de coupe et/ou de la profondeur d'engagement dudit foret.

Selon une caractéristique possible, ledit procédé comprend des étapes consistant à :
- mesurer et enregistrer en temps réel des nouvelles fréquences de rotation dudit moteur de coupe et/ou d'avance en fonction du temps, ou
- mesurer et enregistrer en temps réel un courant consommé par ledit moteur de coupe et/ou d'avance en fonction du temps ;
- comparer les enregistrements ainsi obtenus à des courbes prédéterminées de variation en fonction du temps de la fréquence de rotation dudit moteur de coupe et/ou d'avance ou d'un courant consommé par ledit moteur de coupe et/ou d'avance, lesdites courbes prédéfinies correspondant à des événements et natures d'événements prédéterminés ;
- déduire de cette comparaison la survenue d'un évènement et sa nature. Selon une caractéristique possible, ladite nature appartient au groupe comprenant :
- une entrée dudit outil coupant dans ledit élément à percer
- une sortie dudit outil coupant dudit élément à percer,
- le passage dudit outil coupant dans une nouvelle matière, ledit élément à percer comprenant l'empilement d'au moins deux matières différentes ;
- un bourrage de copeaux dans un trou en cours de perçage.

Selon une caractéristique possible, lesdits moteurs sont régulés en vitesse ou en courant par la mise en œuvre d'une régulation vectorielle.

L'invention concerne également un dispositif selon la revendication 10 de perçage d'un élément à percer, ledit
dispositif comprenant :
   - un arbre de sortie susceptible d'être entrainé en rotation et en translation suivant un même axe ;
   - des moyens de solidarisation d'un outil coupant audit arbre de sortie ;
   - un moteur de coupe apte à induire un mouvement de rotation dudit arbre de sortie suivant ledit axe ;
   - un moteur d'avance apte à induire un mouvement de translation dudit arbre de sortie suivant ledit axe ;
ledit procédé comprenant au moins :
   - des moyens de mesure d'un couple appliqué audit arbre de sortie suivant ledit axe ;
   - des moyens de mesure d'une poussée appliquée audit arbre de sortie suivant ledit axe ;
   - des moyens de comparaison dudit couple à un seuil prédéterminé de couple (C)
   - des moyens de comparaison de ladite poussée à un seuil prédéterminé de poussée (P) ;
   - des moyens d'adaptation de la régulation desdits moteurs, lesdits moyens d'adaptation étant configurés pour induire que :
      - lesdits moteurs de coupe et d'avance sont régulés en vitesse tant que
         ledit couple et ladite poussée sont inférieurs respectivement audit seuil de couple (C) et audit seuil de poussée (P) ;
      - lorsque ledit couple ou ladite poussée atteint ou dépasse ledit seuil de couple (C) ou de poussée (P), le moteur générant le couple ou la poussée dont le seuil est dépassé est régulé en courant, l'autre moteur restant régulé en vitesse de manière telle que l'avance par tour dudit outil coupant soit égale à une valeur prédéterminée (ATR).

Selon une caractéristique possible, lesdits moyens d'adaptation de la régulation, lorsque l'un des moteurs est régulé en courant, sont configurés pour déterminer une consigne de fréquence de rotation dudit moteur régulé en vitesse en fonction de la fréquence de rotation dudit moteur régulé en courant.

Selon une caractéristique possible, lesdits moteurs de coupe et d'avance sont initialement régulés en vitesse selon des fréquences de rotation initiales.

Selon une caractéristique possible, lorsque ledit couple atteint ledit seuil de couple (C), lesdits moyens d'adaptation de ladite régulation sont configurés pour :
- réguler en courant ledit moteur de coupe de telle sorte que ledit couple ne dépasse pas ledit seuil de couple (C) ;
- mesurer une nouvelle fréquence de rotation (N") dudit moteur de coupe ;
- déterminer une nouvelle fréquence rotation (V") dudit moteur d'avance telle que l'avance par tour dudit outil coupant soit égale à ladite valeur prédéterminée (ATR) ;
- réguler dudit moteur d'avance de façon qu'il soit entrainé à ladite nouvelle fréquence de rotation (V").

Selon une caractéristique possible, lorsque ladite poussée atteint ledit seuil de poussée (P), lesdits moyens d'adaptation de ladite régulation sont configurés pour :
- réguler ledit moteur d'avance de telle sorte à ce que ladite poussée ne dépasse pas ledit seuil prédéterminé de poussée (P) ;
- mesurer une nouvelle fréquence de rotation (V") dudit moteur d'avance ;
- déterminer une nouvelle fréquence (N") de rotation dudit moteur de coupe telle que l'avance par tour dudit outil coupant soit égale à ladite valeur prédéterminée (ATR) ;
- réguler ledit moteur de coupe de façon qu'il soit entrainé à ladite nouvelle fréquence de rotation (N").

Selon une caractéristique possible, ladite avance par tour prédéterminée (ATR) dudit outil coupant est :
- constante, ou
- déterminée en fonction de la fréquence de rotation dudit outil de coupe et/ou de la profondeur d'engagement dudit foret.

Selon une caractéristique possible ledit dispositif est configuré pour :
- mesurer et enregistrer en temps réel des nouvelles fréquences de rotation dudit moteur de coupe et/ou d'avance en fonction du temps, ou
- mesurer et enregistrer en temps réel un courant consommé par ledit moteur de coupe et/ou d'avance en fonction du temps ;
- comparer les enregistrements ainsi obtenus à des courbes prédéterminées de variation en fonction du temps de la fréquence de rotation dudit moteur de coupe et/ou d'avance ou d'un courant consommé par ledit moteur de coupe et/ou d'avance, lesdites courbes prédéfinies correspondant à des événements et natures d'événements prédéterminés ;
- déduire de cette comparaison la survenue d'un évènement et sa nature. Dans ce cas, ladite nature appartient préférentiellement au groupe comprenant :
- une entrée dudit outil coupant dans ledit élément à percer ;
- une sortie dudit outil coupant dudit élément à percer ;
- le passage dudit outil coupant dans une nouvelle matière, ledit élément à percer comprenant l'empilement d'au moins deux matières différentes ;
- un bourrage de copeaux dans un trou en cours de perçage.

Selon une caractéristique possible, un dispositif selon l'invention comprend des moyens de régulation en vitesse ou en courant desdits moteurs, lesdits moyens de régulation mettant en œuvre une régulation vectorielle.

L'invention concerne également un programme d'ordinateur selon la revendication 19 comportant des instructions de code de programme pour l'exécution des étapes du procédé de perçage selon l'une quelconque des variantes exposées ci-avant, lorsque ledit programme est exécuté par un processeur.

L'invention concerne également un support d'enregistrement selon la revendication 20 lisible par un ordinateur sur lequel est enregistré un programme d'ordinateur comportant des instructions de code de programme pour l'exécution des étapes du procédé de perçage selon l'une quelconque des variantes exposées ci-avant, lorsque ledit programme est exécuté par un processeur.

### 5. Description des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
[Fig 1] la figure 1 illustre un exemple de dispositif de perçage selon l'invention ;
[Fig 2] la figure 2 illustre un exemple de contrôleur du dispositif de perçage de la figure 1 ;
[Fig 3] la figure 3 illustre un exemple de commande vectorielle d'un moteur synchrone à aimants permanents ;
[Fig 4] la figure 4 illustre un logigramme d'un exemple de procédé de perçage selon l'invention ;
[Fig 5] la figure 5 illustre un exemple de courbes de variation de la vitesse du moteur de coupe et de variation du couple pendant le perçage de l'empilement d'une couche de matière tendre et d'une couche de matière dure ;
[Fig 6] la figure 6 illustre un exemple de courbes de variation de la vitesse du moteur de coupe et de variation du couple pendant le perçage de l'empilement d'une couche de matière dure et d'une couche de matière tendre ;
[Fig 7] la figure 7 illustre un exemple de courbes de variation de la vitesse du moteur de coupe et de variation du couple pendant le perçage d'un élément monocouche avec un foret conique ;
[Fig 8] la figure 8 illustre un exemple de courbes de variation de la vitesse du moteur de coupe et de variation du couple pendant le perçage-fraisurage d'un élément monocouche avec un foret adapté à un perçage de ce type.

### 6. Description de modes de réalisation particuliers

### 6.1. Dispositif

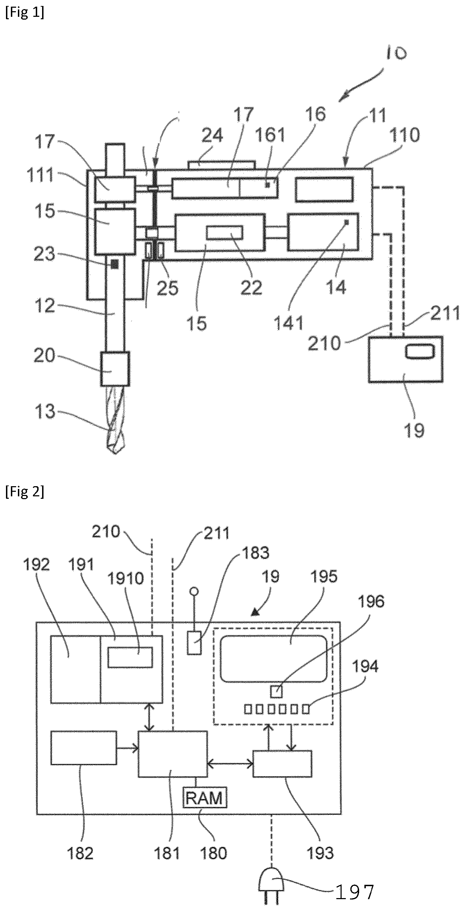

On présente, en relation avec les figures 1 à 3, un exemple de dispositif de perçage pour la mise en œuvre d'un procédé selon l'invention.

Ainsi que cela est représenté sur la figure 1, un tel dispositif de perçage comprend :
- une perceuse 10 à paramètres de coupe contrôlés, et
- un contrôleur 19 configuré pour permettre la mise en œuvre d'un procédé selon l'invention.

Un tel dispositif de perçage est connu en soit de l'homme du métier et n'est pas décrit en détail ici hormis les éléments plus spécifiques à l'invention.

Une telle perceuse 10 comprend un carter 11.

Le carter 11 comprend une première portion de carter 110 et une deuxième portion de carter 111 qui s'étendent sensiblement perpendiculairement l'une à l'autre. Dans une variante, le carter pourrait s'étendre le long d'un unique axe et ainsi ne pas présenter une forme essentiellement en T.

La perceuse comprend un arbre de sortie 12, ou broche, mobile en rotation et en translation selon un même axe. Cet arbre de sortie 12 est relié au moyen d'une ou plusieurs chaines de transmission à des moyens moteurs.

Dans ce mode de réalisation, les moyens moteurs comprennent :
- un moteur de coupe 14 lié à l'arbre de sortie 12 par une chaine de transmission 15 permettant d'entrainer en rotation l'arbre de sortie 12, et donc l'outil coupant 13 qui y est solidarisé, et
- un moteur d'avance 16, lié à l'arbre de sortie 12 par une chaine de transmission 17 permettant d'entrainer en translation l'arbre de sortie 12, et donc l'outil coupant qui y est solidarisé.

Ces moteurs sont préférentiellement des moteurs électriques synchrones à aimants permanents. D'autres types de moteurs adaptés pourraient toutefois être mis en œuvre.

L'entrainement en rotation et l'entrainement en avance de la broche 12 se font selon un même axe de manière telle que la fréquence de rotation de la broche (et de l'outil coupant qui en est solidaire) soit proportionnelle à la fréquence de rotation du moteur de coupe et que la vitesse d'avance de la broche (et de l'outil coupant qui en est solidaire) soit proportionnelle à la fréquence de rotation du moteur d'avance. Un tel principe est notamment décrit dans le document FR3000693.

La perceuse comprend des moyens de solidarisation 20 d'un outil coupant 13, par exemple un foret, placés à l'extrémité de la broche 12. Ces moyens de solidarisation peuvent par exemple comprendre une pince de foret. Bien évidemment, ces moyens de solidarisation peuvent permettre de solidariser à la perceuse une pluralité de forets différents.

La perceuse comprend des moyens de mesure d'au moins une information représentative du couple appliqué à l'outil coupant suivant son axe de rotation et des moyens de mesure d'au moins une information représentative de la poussée appliquée à l'outil coupant suivant son axe de translation.

Les moyens de mesure d'au moins une information représentative du couple comprennent l'un ou la combinaison de plusieurs des moyens suivants :
- un capteur de couple 22 appliqué au foret selon son axe de rotation ;
- un capteur de courant ou de puissance électrique 1910 consommée le moteur de coupe.

Les moyens de mesure d'au moins une information représentative de la poussée comprennent l'un ou la combinaison de plusieurs des moyens suivants :
- un capteur de poussée 23 axiale apte à mesurer l'effort appliqué au foret le long de son axe de rotation ;
- un capteur de courant ou de puissance électrique 1910 consommée le moteur d'avance.

Le contrôleur peut être intégré au carter de la perceuse ou bien être relié à celle-ci par un câble qui comprend classiquement des fils d'alimentation de puissance 210 des moteurs et éventuellement des fils de communication 211. Il pourra éventuellement également comprendre des tubes de passage de fluide(s) comme du lubrifiant.

Selon l'exemple de réalisation illustré à la figure 2, le contrôleur 19 comprend une mémoire vive 180 (par exemple une mémoire RAM), une unité de traitement 181 équipée par exemple d'un processeur, et pilotée par un programme d'ordinateur, comprenant des instructions de code de programme pour l'exécution d'un procédé de perçage selon l'invention, ce programme étant stocké dans une mémoire morte 182 (par exemple une mémoire ROM). Le contrôleur comprend également un module d'émission/réception 183 filaire ou sans fil lui permettant de communiquer avec la perceuse et éventuellement avec d'autres équipements tel qu'un réseau informatique, ce module d'émission/réception incluant :
- un récepteur pour recevoir des signaux délivrés par les différents moyens de mesure (capteur) intégrés à la perceuse ;
- un émetteur pour émettre des commandes vers la perceuse.

La perceuse comprend également un module d'émission/réception (non représenté) pour communiquer avec le contrôleur.

Le contrôleur comprend également une interface d'entrée-sortie 193, une interface utilisateur pour gérer un moyen d'introduction de commande 194 (clavier, écran tactile, souris, ...), un moyen d'affichage 195 (écran, afficheur, voyant lumineux) et éventuellement, un moyen d'émission d'un signal sonore sur une fréquence audible 196.

L'interface entrée-sortie peut permettre la programmation de stratégies de perçage. La perceuse peut par elle-même intégrer une interface homme machine 24 permettant le démarrage du perçage et la visualisation d'informations relatives au déroulement du perçage.

Ce contrôleur 19 comprend deux alimentations de puissance 191, 192 permettant d'alimenter le moteur d'entrainement en rotation 14 et le moteur d'avance 16. Ces alimentations peuvent par exemple être des onduleurs pilotés grâce à une structure de pilotage vectoriel convenant à l'alimentation de moteurs synchrones à aimants permanents. Ces moteurs sont munis d'un capteur d'angle 141, 161 dont le signal, représentatif de l'angle du rotor par rapport au stator, est utilisé par les onduleurs pour alimenter correctement les moteurs synchrones.

Le contrôleur 19 comprend un connecteur de raccordement 197 à une source d'alimentation en courant électrique. Le contrôleur est dissocié de la perceuse.

A l'initialisation, les instructions de code du programme d'ordinateur sont par exemple chargées dans la mémoire vive 180 avant d'être exécutées par le processeur de l'unité de traitement 181. La mémoire vive 180 contient notamment les formules adéquates de calcul des différentes grandeurs déterminées au cours de la mise en œuvre di procédé. Le processeur de l'unité de traitement 181 réalise les différents calculs nécessaires. Il peut ensuite par exemple afficher le résultat, l'enregistrer, le transmettre à un réseau, le comparer à une ou plusieurs valeurs de seuil prédéterminées et piloter le cas échéant le dispositif de vissage en conséquence, émettre une alarme visuelle et/ou sonore en cas de nécessité.

La figure 2 illustre seulement une manière particulière, parmi plusieurs possibles, de réaliser un contrôleur, afin qu'il effectue les étapes du procédé de perçage selon l'invention (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le contrôleur est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur. Il est également possible que le logiciel soit déjà chargé dans le contrôleur et le déblocage de certaines options soit réalisé grâce à un code obtenu en ligne ou que le logiciel soit obtenu en ligne.

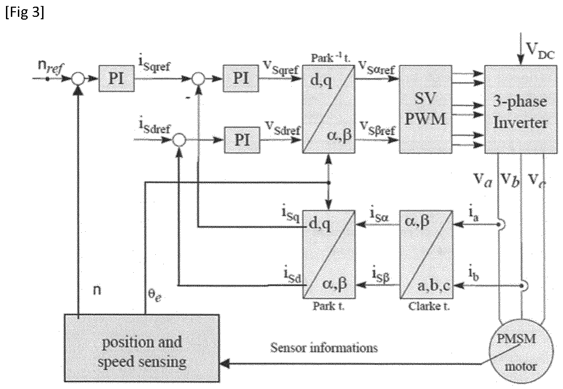

Le contrôleur 19 intègre des moyens de commande vectoriel des moteurs. La figure 3 illustre un schéma d'un exemple de commande vectorielle. Deux commandes de ce type sont donc mises en œuvre, l'une pour piloter le moteur de coupe, l'autre pour piloter le moteur d'avance.

Le principe général d'une commande vectorielle est de piloter le moteur en vitesse sur la base :
- d'une commande de vitesse de consigne nref, et
- d'une commande de courant de consigne isdref définissant le flux dans le moteur et généralement mise à zéro.

Ces commandes intègrent l'une et l'autre un régulateur .

La commande en vitesse nref est suivie d'une commande en courant de consigne isqref qui reste inactive tant que la composante de courant isq reste en dessous de la consigne isqref.

Le couple électromagnétique du moteur est égal au produit de la composante isq par la constante de couple Kt du moteur.

Cette régulation en cascade permet donc une régulation du moteur en vitesse à un niveau nref tant que le couple résistant opposé au moteur reste en dessous de la valeur Isqref.Kt, puis si le couple résistant atteint Isqref.Kt, la régulation se fait en courant avec comme consigne isqref. De ce fait, le moteur devient régulé de façon à produire un couple constant et sa vitesse s'établit à un niveau moindre que nref.

Selon l'invention, les moteurs sont par défaut régulés en vitesse. Toutefois :
- lorsque le couple atteint un seuil prédéterminé, le moteur de coupe est piloté en courant et le moteur d'avance est piloté en vitesse, et
- lorsque la poussée atteint un seuil prédéterminé, le moteur d'avance est piloté en courant et le moteur de coupe est piloté en vitesse.

Ce principe sera détaillé plus loin en relation avec la description d'un procédé selon l'invention.

### 6.2. Définitions et abréviations

Par souci de clarté, on présente ci-après certaines grandeurs physiques impliquées dans la mise en œuvre d'une technique selon l'invention.

Le tableau suivant liste, pour le moteur de coupe et pour le moteur d'avance, le nom des consignes qui lui sont appliquées en temps réel selon qu'il est régulé en vitesse ou en courant (couple), ainsi que les valeurs maximales de ces consignes.

| | Consigne en temps réel | Valeur maxi de la consigne |
|---|---|---|
| Régulation en vitesse du moteur de coupe | ncref (variable) | n (tr/mn) |
| Régulation en courant du moteur de coupe | isqcref (invariable) | c (A) |
| Régulation en vitesse du moteur d'avance | naref (variable) | v (tr/mn) |
| Régulation en courant du moteur d'avance | isqaref (invariable) | p (A) |

Lorsque l'on considère le schéma de commande vectorielle de la figure 3 pour réguler le moteur de coupe, nref doit être remplacé par ncref, isqref doit être remplacé par isqcref.

Lorsque l'on considère le schéma de commande vectorielle de la figure 3 pour réguler le moteur d'avance, nref doit être remplacé par naref, isqref doit être remplacé par isqaref.

Le tableau ci-dessous liste les noms de différents paramètres impliqués dans la mise en œuvre de la technique selon l'invention.

| | |
|---|---|
| Vitesse de rotation maxi du foret | N (tr/mn) |
| Couple maxi appliqué au foret | C (N.mm) |
| Vitesse d'avance maxi du foret | V (mm/mn) |
| Poussée maxi appliquée au foret | P (N) |
| Vitesse de rotation du foret en temps réel | N' (tr/mn) |
| Vitesse d'avance du foret en temps réel | V' (mm/mn) |
| Vitesse de rotation du moteur de coupe en temps réel | N" (tr/mn) |
| Vitesse de rotation du moteur d'avance en temps réel | V" (tr/mn) |
| Profondeur d'engagement du foret | prof (mm) |
| Epaisseur de la paroi | E (mm) |

Le principe sur lequel repose l'invention vise à réguler les moteurs pour obtenir que le foret se déplace avec une avance par tour ATR prédéterminée.
A un instant, ATR = V'/N'
Avec : N"=K1.N'
   V"=K2.V'
D'où : ATR=(V".K1)/(K2.N")
L'unité usuelle d'avance par tour est le mm/tr.

### 6.3. Procédé

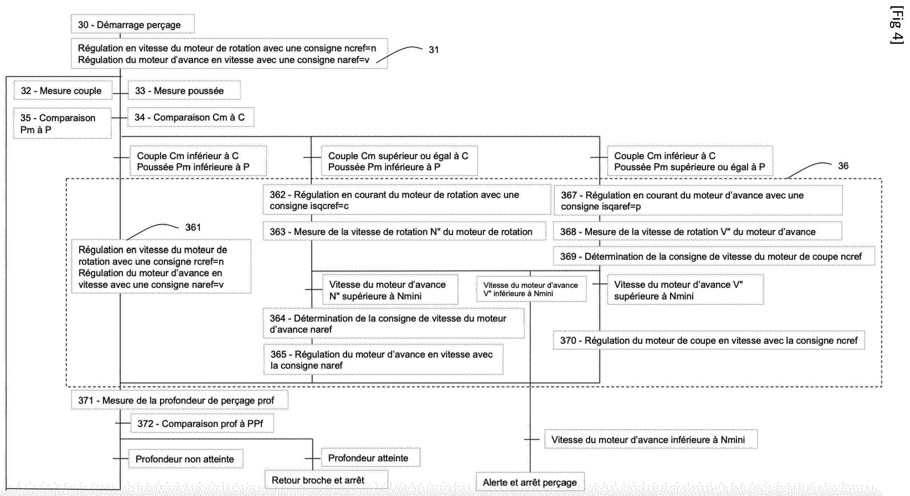

On décrit ci-après, en relation avec la figure 4, un exemple de procédé selon l'invention d'un élément à percer composé ou non d'une pluralité de couches de matières différentes.

Un tel procédé de perçage selon l'invention vise à adapter les paramètres de coupe de façon automatique en fonction des conditions de perçage en adaptant le mode de régulation des moteurs, ceci en garantissant une avance par tour de l'outil coupant conforme à une valeur prédéterminée.

Avant de réaliser une opération de perçage, le technicien en charge de la programmation de la perceuse doit choisir les paramètres selon lesquels le perçage doit être réalisé, parmi ceux-ci on trouve :
- la vitesse de rotation du moteur de coupe, de consigne ncref, avec laquelle le perçage va être démarré, sachant que le mode de régulation en vitesse des moteurs est le mode par défaut tant que la charge sur les moteurs reste en dessous d'un certain seuil.
- la stratégie d'avance par tour du foret, ATR, elle peut être constante ou dépendre de la profondeur d'engagement de l'outil coupant ou encore de la vitesse de rotation du moteur de coupe. Cette stratégie rend les vitesses de rotation des moteurs de coupe et d'avance interdépendantes, ainsi si ncref est fixée alors naref en découle de façon telle que naref = ATR . ncref. La profondeur d'engagement du foret est la distance entre la pointe du foret et la surface de la paroi à l'entrée du trou en temps réel.
- les seuils des valeurs de charge (C) et (P) sur l'outil coupant, en couple et en poussée, à partir desquelles le mode de régulation sur les moteurs passe d'une régulation en vitesse à une régulation en couple. De manière préférentielle, le seuil de coupe C et le seuil de poussée P seront associés à des intervalles de tolérances.

Le procédé décrit est applicable indifféremment dans un perçage d'une paroi constituée d'une ou plusieurs matières.

Au démarrage d'une opération de perçage (étape 30), le contrôleur pilote initialement, sur la base de deux consignes ncref et naref, les moteurs de coupe et d'avance, en vitesse et de préférence de manière vectorielle (étape 31).

Les moteurs de coupe et d'avance sont ainsi pilotés de manière telle que leur fréquence de rotation atteignent respectivement les consignes ncref et naref dont les valeurs sont initialement et respectivement n et v.

Le procédé comprend une étape 32 de mesure en temps réel d'au moins une valeur de charge représentative du couple appliqué à l'outil coupant et une étape 33 de mesure en temps réel d'au moins une valeur de charge représentative de la poussée appliquée à l'outil coupant. Des exemples de valeurs de charge ont été donnés plus haut. Par simplification, nous utiliserons les expressions mesure de couple et mesure de poussée en lieu et place de mesure d'au moins une valeur de présentative du couple et de mesure d'au moins une valeur de présentative de la poussée.

Le procédé comprend une étape 34 de comparaison en temps réel du couple mesuré Cm avec un seuil prédéterminé de couple C et une étape 35 de comparaison en temps réel de la poussée mesurée Pm avec un seuil prédéterminé de poussée P.

Le procédé comprend une étape 36 d'adaptation de la régulation des moteurs de coupe ou d'avance en fonction du résultat de la comparaison du couple mesuré Cm et de la poussée mesurée Pm respectivement avec les seuils de couple C et de poussée P. L'étape 36 d'adaptation induit que :
- les moteurs de coupe et d'avance sont régulés en vitesse tant que le couple Cm et la poussée Pm sont inférieurs respectivement au seuil de couple C et au seuil de poussée P ;
- lorsque le couple mesuré Cm ou la poussée mesurée Pm atteint ou dépasse le seuil de couple C ou de poussée P, le moteur générant le couple ou la poussée dont le seuil est dépassé est régulé en courant, l'autre moteur restant régulé en vitesse de manière telle que l'avance par tour de l'outil coupant soit égale à une valeur prédéterminée.

Tant que le couple mesuré Cm et la poussée mesurée Pm restent inférieurs aux seuils de couple C et de poussée P, le contrôleur continu (étape 361) de réguler les moteurs de coupe et d'avance en vitesse respectivement selon les consignes de fréquence de rotation ncref=n du moteur de coupe et de fréquence de rotation naref=v du moteur d'avance. L'outil coupant continu de ce fait d'être entrainé à la même vitesse d'avance par tour ATR.

Si, au cours du perçage, le couple mesuré Cm devient égal au seuil de couple C, le contrôleur pilote le moteur de coupe non plus en vitesse mais en couple (courant) alors qu'il continu de piloter le moteur d'avance en vitesse.

Dans ce cas, l'étape 36 d'adaptation de la régulation comprend les sous-étapes suivantes :
- sous-étape 362 de régulation en courant du moteur de coupe avec une consigne isqcref=c de telle sorte que le couple appliqué à l'outil coupant ne dépasse pas le seuil de couple C ;
- sous-étape 363 de mesure de la nouvelle fréquence de rotation N" du moteur de coupe résultant de sa régulation en couple ;
- sous-étape 364 de détermination de la nouvelle fréquence rotation V" du moteur d'avance et de la consigne naref en conséquence telle que l'avance par tour de l'outil coupant soit égale à la valeur prédéterminée de vitesse d'avance par tour ;
- sous-étape 365 régulation en vitesse du moteur d'avance avec la consigne naref de façon qu'il soit entrainé à la nouvelle fréquence de rotation V".
- Optionnellement, le procédé comprend, après la sous-étape 363 de mesure de la nouvelle fréquence de rotation N", une sous-étape de comparaison de N" avec une valeur Nmini prédéterminée. Si la nouvelle fréquence de rotation N" est inférieure à Nmini, l'opération de perçage en cours est arrêtée avec préférentiellement l'émission d'un message d'alerte. Dans le cas contraire, l'opération de perçage en cours se poursuit en régulant le moteur d'avance de façon qu'il soit entrainé à la nouvelle fréquence de rotation V".

Si, ou cours du perçage, la poussée mesuré Pm devient égale au seuil de poussée P, le contrôleur pilote le moteur d'avance non plus en vitesse mais en couple (courant) alors qu'il continu de piloter le moteur de coupe en vitesse.

Dans ce cas, l'étape 36 d'adaptation de la régulation comprend les sous-étapes suivantes :
- sous-étape 367 de régulation en courant du moteur d'avance avec une consigne isqaref de telle sorte à ce que la poussée Pm ne dépasse pas le seuil prédéterminé de poussée P ;
- sous-étape 368 de mesure de la nouvelle fréquence de rotation V" du moteur d'avance ;
- sous-étape 369 de détermination de la nouvelle fréquence de rotation N" et de la consigne de vitesse ncref du moteur de coupe telle que l'avance par tour de l'outil coupant soit égale à la valeur prédéterminée ;
- sous-étape 370 de régulation en vitesse du moteur de coupe avec la consigne ncref de façon qu'il soit entrainé à la nouvelle fréquence de rotation N".
- Optionnellement, le procédé comprend, après la sous-étape 369 de détermination de la nouvelle consigne de vitesse ncref, une sous-étape de comparaison de ncref avec une valeur Nmini prédéterminée. Si la nouvelle consigne de rotation ncref est inférieure à Nmini, l'opération de perçage en cours est arrêtée avec préférentiellement l'émission d'un message d'alerte. Dans le cas contraire l'opération de perçage en cours se poursuit en régulant le moteur de coupe de façon qu'il soit entrainé à la nouvelle fréquence de rotation N".

Le procédé comprend une étape 371 de mesure en temps réel de la profondeur de perçage prof (profondeur d'engagement du foret dans le trou) et une étape 372 de comparaison en temps réel de la profondeur de perçage mesurée prof à un seuil prédéterminé de profondeur de perçage finale PPf correspondant à la profondeur de perçage à atteindre. Tant que la profondeur de perçage mesurée prof est inférieure au seuil prédéterminé de profondeur de perçage finale PPf, l'opération de perçage se poursuit. Lorsque la profondeur de perçage mesurée prof atteint le seuil prédéterminé de profondeur de perçage finale PPf, l'outil coupant est rétracté et l'opération de perçage est stoppée.

Plusieurs stratégies peuvent être mises en œuvre pour déterminer la valeur de l'avance par tour ATR prédéterminée. Elles sont données à titre d'exemple pour illustrer et ouvrent la possibilité de combinaisons ou variations.

### Stratégie 1 : avance par tour constante

Selon une première stratégie, l'adaptation de la régulation conduit à maintenir constante l'ATR. Dans ce cas, l'avance par tour prédéterminée choisie en amont du lancement d'une opération de perçage est maintenue si bien que la valeur prise en compte de l'avance par tour pendant l'étape d'adaptation de la régulation des moteurs reste la même.

Dans ce cas, l'avance par tour reste constante si bien que : $ATR = V / N = V ′ / N ′ = V " / N "$

Il en résulte que les consignes des moteurs sont telles que représentées dans le tableau ci-dessous.

| Stratégie de contrôle d'avance par tour 1 | | Moteur decoupe | |
|---|---|---|---|
| | | Régulation en vitesse | Régulation en courant |
| Moteur d'avance | Régulation en vitesse | ncref = n | isqcref =c |
| | | naref =v | naref =v.N'/N |
| | Régulation en courant | ncref =n.V'/V | Sans objet |
| | | isqaref = p | |

### Stratégie 2 : avance par tour variable en fonction de la vitesse de rotation de l'outil coupant

Selon la deuxième stratégie, l'avance par tour du foret dépend de la vitesse de rotation N de l'outil coupant. Dans ce cas, on associe à différentes plages de vitesses de rotation N de l'outil coupant différentes valeurs d'un coefficient A2. Le tableau ci-dessous donne des exemples illustratifs de valeur de A2 pour des valeurs de N'.

| N' | A2 |
|---|---|
| 6000 à 12000 | 0.1 |
| 1800 à 6000 | 0.08 |
| 500 à 1800 | 0.05 |

Dans ce cas, les consignes des moteurs sont telles que représentées dans le tableau ci-dessous.

| Stratégie de contrôle d'avance par tour 2 | | Moteur de coupe | |
|---|---|---|---|
| | | Régulation en vitesse | Régulation en courant |
| Moteur d'avance | Résulation en vitesse | ncref = n | isqcref = c |
| | | naref = v | naref = K2.N'.A2 |
| | Régulation en courant | ncref =K1.V'/A2 | Sans objet |
| | | isqaref = p | |

Dans le cas d'une régulation du moteur d'avance en courant suivi d'un calcul de la consigne de régulation en vitesse du moteur de coupe, la vitesse du moteur de coupe n'étant à priori pas connue, les séquence suivantes seront réalisée :
- choix d'une avance par tour dans le tableau.
- calcul de la consigne de vitesse de rotation du moteur de coupe et de la vitesse de rotation du foret en résultant.
- comparaison de la valeur de vitesse de rotation de l'outil coupant avec la plage de vitesse associée à l'avance par tour choisie.
- si la plage considérée contient bien la vitesse calculée alors le moteur de coupe est régulé en vitesse avec la consigne calculée.
- si la plage considérée ne contient pas la vitesse calculée alors l'avance par tour suivante dans le tableau est prise en considération pour un nouveau calcul de consigne de vitesse de moteur de coupe. Ce calcul est répété jusqu'à ce qu'il y ait cohérence entre la vitesse calculée et la plage de vitesse considérée

### Stratégie 3 : avance par tour variable en fonction de la profondeur d'engagement de l'outil coupant

Dans la stratégie 3, l'avance par tour dépend de la profondeur d'engagement de l'outil coupant suivant la fonction : ATR= A3.(2.E-prof)/2.E

Ceci conduit à avoir une avance A3 à l'entrée du trou et A3/2 à la sortie, après que le foret ait parcouru une profondeur de E mm (épaisseur de la paroi).

Dans ce cas, les consignes des moteurs sont telles que représentées dans le tableau ci-dessous.

| Stratégie de contrôle d'avance par tour 2 | | Moteur decoupe | |
|---|---|---|---|
| | | Régulation en vitesse | Régulation en courant |
| Moteur d'avance | Régulation en vitesse | ncref = n | isquref = c |
| | | naref = v | naref = K2.N'.A3.(2.E-prof)/2.E |
| | Régulation en courant | ncref =K1.V'.2.E/A3.(2.E-prof) | Sans objet |
| | | isqaref = p | |

### Exemple de courbes de régulation des moteurs

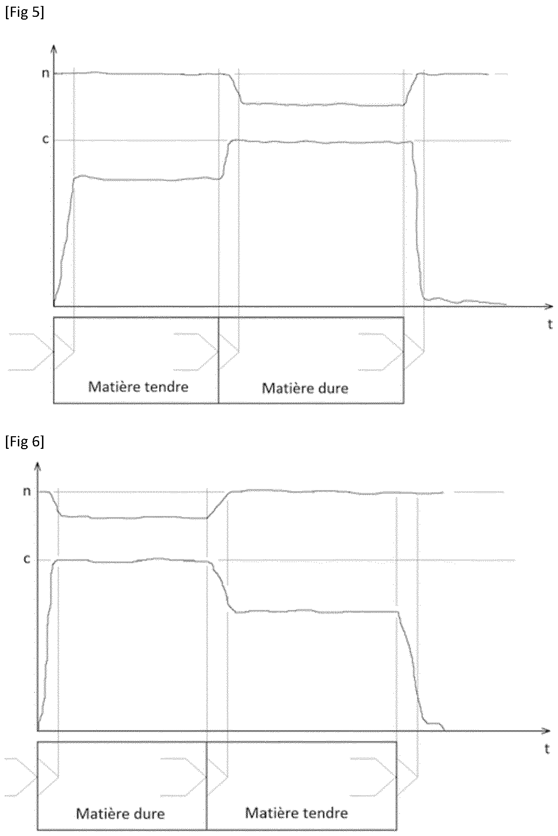

Les figures 5, 6, 7 et 8 illustrent des exemples de courbes de variation de la vitesse n du moteur de coupe et de variation du couple c respectivement pendant :
- le perçage de l'empilement d'une couche de matière tendre et d'une couche de matière dure ;
- le perçage de l'empilement d'une couche de matière dure et d'une couche de matière tendre ;
- le perçage d'un élément monocouche avec un foret conique ;
- le perçage-fraisurage d'un élément monocouche avec un foret adapté à un perçage de ce type.

On observe sur la figure 5 qu'après l'entrée en pleine matière du foret dans la matière tendre, le couple c se stabilise à une valeur inférieure au seuil de couple C si bien que le moteur de coupe est régulé en vitesse avec n=ncref. Après l'entrée du foret dans la matière dure, le couple c augmente si bien que le moteur de coupe est régulé en couple afin que le couple se stabilise au seuil de couple C.

On observe sur la figure 6 qu'après l'entrée du foret dans la matière dure, le couple c augmente si bien que le moteur de coupe est régulé en couple afin que le couple se stabilise au seuil de couple C. Après l'entrée du foret en pleine matière dans la matière tendre, le couple c se stabilise à une valeur inférieure à au seuil de couple C si bien que le moteur de coupe est régulé en vitesse avec n=ncref.

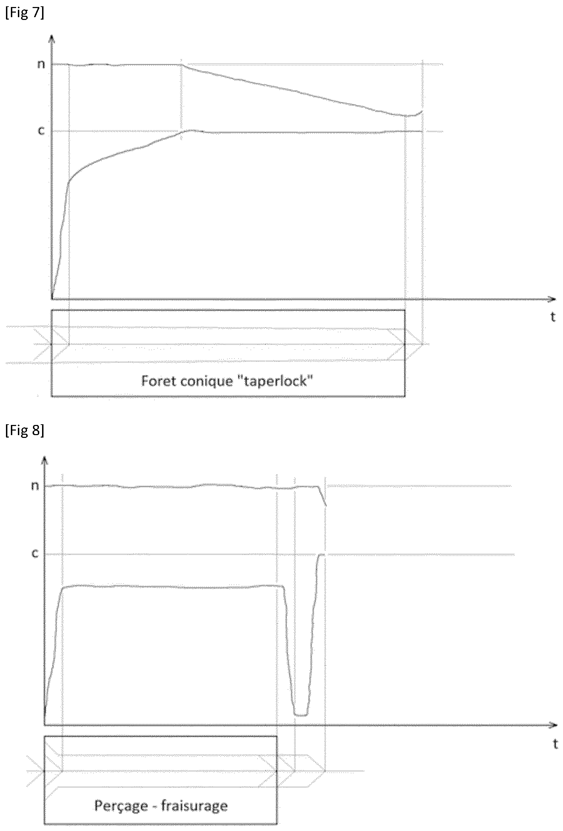

On observe sur la figure 7 que le moteur de coupe est initialement régulé en vitesse avec n=ncref et, qu'après l'entrée du foret dans la matière, le couple c augmente si bien qu'au-delà d'une certaine valeur, le moteur de coupe est régulé en couple afin que le couple se stabilise au seuil de couple C.

On observe sur la figure 8 que le moteur de coupe est initialement régulé en vitesse avec n=ncref et, qu'après l'entrée du foret dans la matière, le couple c se stabilise à une valeur inférieure au seuil C. Puis, lorsque le foret débouche de la pièce à percer, le couple C décroit de manière importante avant de raugmenter lors de la réalisation de la fraisure, si bien que le moteur de coupe est régulé en couple afin que le couple se stabilise au seuil de couple C.

### Identification d'évènements au cours du perçage

Dans une variante, le procédé comprend des étapes consistant à :
- mesurer et enregistrer en temps réel des nouvelles fréquences de rotation N", V" du moteur de coupe et/ou d'avance en fonction du temps, ou
- mesurer et enregistrer en temps réel un courant consommé par le moteur de coupe et/ou d'avance en fonction du temps ;
- comparer les enregistrements ainsi obtenus à des courbes prédéterminées de variation en fonction du temps de la fréquence de rotation du moteur de coupe et/ou d'avance ou d'un courant consommé par le moteur de coupe et/ou d'avance, les courbes prédéfinies correspondant à des événements et natures d'événements prédéterminés ;
- déduire de cette comparaison la survenue d'un évènement et sa nature.

La nature des événements détectables appartient de préférence au groupe comprenant :
- une entrée dudit outil coupant dans ledit élément à percer
- une sortie dudit outil coupant dudit élément à percer,
- le passage dudit outil coupant dans une nouvelle matière, ledit élément à percer comprenant l'empilement d'au moins deux matières différentes ;
- un bourrage de copeaux dans un trou en cours de perçage.

L'identification de l'événement peut par exemple s'appuyer sur la mise en œuvre de la technique décrite dans la demande de brevet FR2103983.

## Revendications

1. Procédé de perçage d'un élément à percer au moyen d'un outil coupant (13) susceptible d'être entrainé en rotation et en translation suivant un même axe par un dispositif de perçage (10, 19), ledit dispositif comprenant :
- un moteur de coupe (14) apte à induire un mouvement de rotation dudit outil coupant (13) suivant ledit axe ;
- un moteur d'avance (16) apte à induire un mouvement de translation dudit outil coupant (13) suivant ledit axe ;
ledit procédé comprenant au moins :
- une étape (32) de mesure d'un couple appliqué audit outil coupant (13) suivant ledit axe ;
- une étape (33) de mesure d'une poussée appliquée audit outil coupant (13) suivant ledit axe ;
- une étape (34) de comparaison dudit couple à un seuil prédéterminé de couple (C) ;
- une étape (35) de comparaison de ladite poussée à un seuil prédéterminé de poussée (P) ;
- une étape (36) d'adaptation de la régulation desdits moteurs, ladite étape (36) d'adaptation induisant que :
- lesdits moteurs de coupe (14) et d'avance (16) sont régulés en vitesse tant que ledit couple et ladite poussée sont inférieurs respectivement audit seuil de couple (C) et audit seuil de poussée (P) ;
le procédé étant **caractérisé en ce que**
- lorsque ledit couple ou ladite poussée atteint ou dépasse ledit seuil de couple (C) ou de poussée (P), le moteur générant le couple ou la poussée dont le seuil est dépassé est régulé en courant, l'autre moteur restant régulé en vitesse de manière telle que l'avance par tour dudit outil coupant (13) soit égale à une valeur prédéterminée (ATR).

2. Procédé de perçage selon la revendication 1 dans lequel ladite étape (36) d'adaptation de la régulation, lorsque l'un des moteurs est régulé en courant, comprend une étape (364, 369) de détermination d'une consigne de fréquence de rotation dudit moteur régulé en vitesse en fonction de la fréquence de rotation dudit moteur régulé en courant.

3. Procédé de perçage selon la revendication 1 ou 2 dans lequel lesdits moteurs de coupe (14) et d'avance (16) sont initialement régulés en vitesse selon des fréquences de rotation initiales.

4. Procédé de perçage selon l'une quelconque des revendications 1 à 3 dans lequel, lorsque ledit couple atteint ledit seuil de couple (C), ladite étape (36) d'adaptation de ladite régulation comprend les premières sous-étapes suivantes :
- régulation (362) en courant dudit moteur de coupe (14) de telle sorte que ledit couple ne dépasse pas ledit seuil de couple (C) ;
- mesure (363) d'une nouvelle fréquence de rotation (N") dudit moteur de coupe (14) ;
- détermination (364) d'une nouvelle fréquence rotation (V") dudit moteur d'avance (16) telle que l'avance par tour dudit outil coupant (13) soit égale à ladite valeur prédéterminée (ATR) ;
- régulation (365) dudit moteur d'avance (16) de façon qu'il soit entrainé à ladite nouvelle fréquence de rotation (V").

5. Procédé de perçage selon l'une quelconque des revendications 1 à 4 dans lequel, lorsque ladite poussée atteint ledit seuil de poussée (P), ladite étape d'adaptation (36) de ladite régulation comprend les deuxièmes sous-étapes suivantes :
- régulation en courant dudit moteur d'avance (16) de telle sorte à ce que ladite poussée ne dépasse pas ledit seuil prédéterminé de poussée (P) ;
- mesure (368) d'une nouvelle fréquence de rotation (V") dudit moteur d'avance (16) ;
- détermination (369) d'une nouvelle fréquence (N") de rotation dudit moteur de coupe (14) telle que l'avance par tour dudit outil coupant (13) soit égale à ladite valeur prédéterminée (ATR) ;
- régulation (370) dudit moteur de coupe (14) de façon qu'il soit entrainé à ladite nouvelle fréquence de rotation (N").

6. Procédé de perçage selon la revendication 4 ou 5 dans lequel ladite avance par tour prédéterminée (ATR) dudit outil coupant (13) est :
- constante, ou
- déterminée en fonction de la fréquence de rotation dudit outil coupant (13) et/ou de la profondeur d'engagement dudit outil coupant (13).

7. Procédé de perçage selon l'une quelconque des revendications 4 à 6, ledit procédé comprend des étapes consistant à :
- mesurer et enregistrer en temps réel des nouvelles fréquences de rotation dudit moteur de coupe (14) et/ou d'avance (16) en fonction du temps, ou
- mesurer et enregistrer en temps réel un courant consommé par ledit moteur de coupe (14) et/ou d'avance (16) en fonction du temps ;
- comparer les enregistrements ainsi obtenus à des courbes prédéterminées de variation en fonction du temps de la fréquence de rotation dudit moteur de coupe (14) et/ou d'avance (16) ou d'un courant consommé par ledit moteur de coupe (14) et/ou d'avance (16), lesdites courbes prédéfinies correspondant à des événements et natures d'événements prédéterminés ;
- déduire de cette comparaison la survenue d'un évènement et sa nature.

8. Procédé de perçage selon la revendication 7 dans lequel ladite nature appartient au groupe comprenant :
- une entrée dudit outil coupant (13) dans ledit élément à percer
- une sortie dudit outil coupant (13) dudit élément à percer,
- le passage dudit outil coupant (13) dans une nouvelle matière, ledit élément à percer comprenant l'empilement d'au moins deux matières différentes ;
- un bourrage de copeaux dans un trou en cours de perçage.

9. Procédé de perçage selon l'une quelconque des revendications 1 à 8 dans lequel lesdits moteurs sont régulés en vitesse ou en courant par la mise en œuvre d'une régulation vectorielle.

10. Dispositif de perçage (10, 19) d'un élément à percer, ledit dispositif comprenant :
- un arbre de sortie (12) susceptible d'être entrainé en rotation et en translation suivant un même axe ;
- des moyens de solidarisation (20) d'un outil coupant (13) audit arbre de sortie (12) ;
- un moteur de coupe (14) apte à induire un mouvement de rotation dudit arbre de sortie (12) suivant ledit axe ;
- un moteur d'avance (16) apte à induire un mouvement de translation dudit arbre de sortie (12) suivant ledit axe ;
ledit dispositif comprenant un contrôleur (19) programmé pour réaliser les étapes d'un procédé selon l'une quelconque des revendications 1 à 9, et au moins :
- des moyens de mesure d'un couple (22) appliqué audit arbre de sortie (12) suivant ledit axe ;
- des moyens de mesure d'une poussée (23) appliquée audit arbre de sortie (12) suivant ledit axe ;
- des moyens de comparaison dudit couple à un seuil prédéterminé de couple (C)
- des moyens de comparaison de ladite poussée à un seuil prédéterminé de poussée (P) ;
- des moyens d'adaptation de la régulation desdits moteurs (14, 16), lesdits moyens d'adaptation étant configurés pour induire que :
- lesdits moteurs de coupe (14) et d'avance (16) sont régulés en vitesse tant que ledit couple et ladite poussée sont inférieurs respectivement audit seuil de couple (C) et audit seuil de poussée (P) ;
- lorsque ledit couple ou ladite poussée atteint ou dépasse ledit seuil de couple (C) ou de poussée (P), le moteur générant le couple ou la poussée dont le seuil est dépassé est régulé en courant, l'autre moteur restant régulé en vitesse de manière telle que l'avance par tour dudit outil coupant soit égale à une valeur prédéterminée (ATR).

11. Dispositif de perçage selon la revendication 10 dans lequel lesdits moyens d'adaptation de la régulation, lorsque l'un des moteurs est régulé en courant, sont configurés pour déterminer une consigne de fréquence de rotation dudit moteur régulé en vitesse en fonction de la fréquence de rotation dudit moteur régulé en courant.

12. Dispositif de perçage selon la revendication 10 ou 11 dans lequel lesdits moteurs de coupe (14) et d'avance (16) sont initialement régulés en vitesse selon des fréquences de rotation initiales.

13. Dispositif de perçage selon l'une quelconque des revendications 10 à 12 dans lequel, lorsque ledit couple atteint ledit seuil de couple (C), lesdits moyens d'adaptation de ladite régulation sont configurés pour :
- réguler en courant ledit moteur de coupe (14) de telle sorte que ledit couple ne dépasse pas ledit seuil de couple (C) ;
- mesurer une nouvelle fréquence de rotation (N") dudit moteur de coupe (14) ;
- déterminer une nouvelle fréquence rotation (V") dudit moteur d'avance (16) telle que l'avance par tour dudit outil coupant (13) soit égale à ladite valeur prédéterminée (ATR) ;
- réguler dudit moteur d'avance (16) de façon qu'il soit entrainé à ladite nouvelle fréquence de rotation (V").

14. Dispositif de perçage selon l'une quelconque des revendications 10 à 13 dans lequel, lorsque ladite poussée atteint ledit seuil de poussée (P), lesdits moyens d'adaptation de ladite régulation sont configurés pour :
- réguler en courant ledit moteur d'avance (16) de telle sorte à ce que ladite poussée ne dépasse pas ledit seuil prédéterminé de poussée (P) ;
- mesurer une nouvelle fréquence de rotation (V") dudit moteur d'avance (16) ;
- déterminer une nouvelle fréquence (N") de rotation dudit moteur de coupe (14) telle que l'avance par tour dudit outil coupant (13) soit égale à ladite valeur prédéterminée (ATR) ;
- réguler ledit moteur de coupe (14) de façon qu'il soit entrainé à ladite nouvelle fréquence de rotation (N").

15. Dispositif de perçage selon la revendication 13 ou 14 dans lequel ladite avance par tour prédéterminée (ATR) dudit outil coupant (13) est :
- constante, ou
- déterminée en fonction de la fréquence de rotation dudit outil coupant (13) et/ou de la profondeur d'engagement dudit outil coupant (13).

16. Dispositif de perçage selon l'une quelconque des revendications 13 à 15, ledit dispositif étant configuré pour :
- mesurer et enregistrer en temps réel des nouvelles fréquences de rotation dudit moteur de coupe (14) et/ou d'avance (16) en fonction du temps, ou
- mesurer et enregistrer en temps réel un courant consommé par ledit moteur de coupe (14) et/ou d'avance (16) en fonction du temps ;
- comparer les enregistrements ainsi obtenus à des courbes prédéterminées de variation en fonction du temps de la fréquence de rotation dudit moteur de coupe (14) et/ou d'avance (16) ou d'un courant consommé par ledit moteur de coupe (14) et/ou d'avance (16), lesdites courbes prédéfinies correspondant à des événements et natures d'événements prédéterminés ;
- déduire de cette comparaison la survenue d'un évènement et sa nature.

17. Dispositif de perçage selon la revendication 16 dans lequel ladite nature appartient au groupe comprenant :
- une entrée dudit outil coupant (13) dans ledit élément à percer ;
- une sortie dudit outil coupant (13) dudit élément à percer ;
- le passage dudit outil coupant (13) dans une nouvelle matière, ledit élément à percer comprenant l'empilement d'au moins deux matières différentes ;
- un bourrage de copeaux dans un trou en cours de perçage.

18. Dispositif de perçage selon l'une quelconque des revendications 10 à 17 comprenant des moyens de régulation en vitesse ou en courant desdits moteurs (14, 16), lesdits moyens de régulation mettant en œuvre une régulation vectorielle.

19. Programme d'ordinateur comportant des instructions de code de programme pour l'exécution des étapes du procédé de perçage selon l'une quelconque des revendications 1 à 9 au moyen d'un dispositif de perçage selon l'une quelconque des revendications 10 à 18, lorsque ledit programme est exécuté par un processeur.

20. Support d'enregistrement lisible par un ordinateur sur lequel est enregistré un programme d'ordinateur selon la revendication 19.

## Patentansprüche

1. Verfahren zum Bohren eines zu bohrenden Elements mittels eines Schneidwerkzeugs (13), das entlang derselben Achse durch eine Vorrichtung zum Bohren (10, 19) drehbar und verschiebbar angetrieben werden kann, wobei die Vorrichtung Folgendes umfasst:
- einen Schneidmotor (14), der geeignet ist, eine Drehbewegung des Schneidwerkzeugs (13) entlang der Achse zu bewirken;
- einen Vorschubmotor (16), der geeignet ist, eine Verschiebebewegung des Schneidwerkzeugs (13) entlang der Achse zu bewirken;
wobei das Verfahren mindestens Folgendes umfasst:
- einen Schritt (32) des Messens eines auf das Schneidwerkzeug (13) ausgeübten Drehmoments entlang der Achse;
- einen Schritt (33) des Messens eines auf das Schneidwerkzeug (13) ausgeübten Schubs entlang der Achse;
- einen Schritt (34) des Vergleichens des Drehmoments mit einem vorbestimmten Drehmomentschwellenwert (C);
- einen Schritt (35) des Vergleichens des Schubs mit einem vorbestimmten Schubschwellenwert (P);
- einen Schritt (36) des Anpassens der Regelung der Motoren, wobei der Schritt (36) des Anpassens bewirkt, dass:
- die Schneidmotoren (14) und die Vorschubmotoren (16) drehzahlgeregelt werden, solange das Drehmoment und der Schub unter dem Drehmomentschwellenwert (C) bzw. dem Schubschwellenwert (P) liegen;
wobei das Verfahren **dadurch gekennzeichnet ist, dass**
- wenn das Drehmoment oder der Schub den Drehmomentschwellenwert (C) oder den Schubschwellenwert (P) erreicht oder überschreitet, der Motor, der das Drehmoment oder den Schub erzeugt, dessen Schwellenwert überschritten wird, stromgeregelt wird, wobei der andere Motor so drehzahlgeregelt bleibt, dass der Vorschub pro Umdrehung des Schneidwerkzeugs (13) einem vorbestimmten Wert (ATR) entspricht.

2. Bohrverfahren gemäß dem Anspruch 1, bei dem der Schritt (36) des Anpassens der Regelung, wenn einer der Motoren im Strom geregelt wird, eine Stufe (364, 369) zur Bestimmung eines Sollwerts der Drehfrequenz des im Drehzahl geregelten Motors in Abhängigkeit von der Drehfrequenz des im Strom geregelten Motors umfasst.

3. Bohrvorrichtung gemäß dem Anspruch 1 oder 2, wobei der Schneidmotor (14) und der Vorschubmotor (16) anfänglich gemäß den anfänglichen Drehfrequenzen drehzahlgeregelt werden.

4. Bohrverfahren gemäß einem der Ansprüche 1 bis 3, wobei, wenn das Drehmoment den Drehmomentschwellenwert (C) erreicht, der Schritt (36) des Anpassens der Regelung die folgenden ersten Teilschritte umfasst:
- Stromregeln (362) des Schneidmotors (14), so dass das Drehmoment den Drehmomentschwellenwert (C) nicht überschreitet;
- Messen (363) einer neuen Drehfrequenz (N") des Schneidmotors (14);
- Bestimmen (364) einer neuen Drehfrequenz (V") des Vorschubmotors (16), so dass der Vorschub pro Umdrehung des Schneidwerkzeugs (13) gleich dem vorbestimmten Wert (ATR) ist;
- Regeln (365) des Vorschubmotors (16), so dass er mit der neuen Drehfrequenz (V") angetrieben wird.

5. Bohrverfahren gemäß einem der Ansprüche 1 bis 4, wobei, wenn der Schub den Schubschwellenwert (P) erreicht, der Schritt (36) des Anpassens der Regelung die folgenden zweiten Teilschritte umfasst:
- Stromregeln des Vorschubmotors (16), so dass der Schub den vorbestimmten Schubschwellenwert (P) nicht überschreitet;
- Messen (368) einer neuen Drehfrequenz (V") des Vorschubmotors (16);
- Bestimmen (369) einer neuen Drehfrequenz (N") des Schneidmotors (14), so dass der Vorschub pro Umdrehung des Schneidwerkzeugs (13) gleich dem vorbestimmten Wert (ATR) ist;
- Regeln (370) des Schneidmotors (14), so dass er mit der neuen Drehfrequenz (N") angetrieben wird.

6. Bohrverfahren gemäß dem Anspruch 4 oder 5, wobei der vorbestimmte Vorschub pro Umdrehung (ATR) des Schneidwerkzeugs (13) wie folgt ist:
- konstant oder
- bestimmt in Abhängigkeit von der Drehfrequenz des Schneidwerkzeugs (13) und/oder der Eingriffstiefe des Schneidwerkzeugs (13).

7. Bohrverfahren gemäß einem der Ansprüche 4 bis 6, wobei das Verfahren Schritte umfasst, die aus Folgendem bestehen:
- Messen und Speichern neuer Drehfrequenzen des Schneidmotors (14) und/oder des Vorschubmotors (16) in Echtzeit in Abhängigkeit von der Zeit, oder
- Messen und Speichern eines von dem Schneidmotor (14) und/oder dem Vorschubmotor (16) verbrauchten Stroms in Echtzeit in Abhängigkeit von der Zeit;
- Vergleichen der so erhaltenen Aufzeichnungen mit vorbestimmten Variationskurven in Abhängigkeit von der Zeit der Drehfrequenz des Schneidmotors (14) und/oder des Vorschubmotors (16) oder des von dem Schneidmotor (14) und/oder dem Vorschubmotor (16) verbrauchten Stroms, wobei die vorbestimmten Kurven vorbestimmten Ereignissen und Ereignisarten entsprechen:
- Ableiten des Eintretens eines Ereignisses und dessen Art aus diesem Vergleich.

8. Bohrverfahren gemäß dem Anspruch 7, wobei die Art zu der Gruppe gehört, die umfasst:
- einen Eingang des Schneidwerkzeugs (13) in das zu bohrende Element,
- einen Ausgang des Schneidwerkzeugs (13) aus dem zu bohrenden Element,
- das Eindringen des Schneidwerkzeugs (13) in ein neues Material, wobei das zu bohrende Element Stapel aus mindestens zwei verschiedenen Materialien umfasst;
- ein Spanstau in einem Loch während des Bohrens.

9. Bohrverfahren gemäß einem der Ansprüche 1 bis 8, wobei die Motoren durch die Umsetzung einer Vektorregelung drehzahl- oder Stromgeregelt werden.

10. Vorrichtung zum Bohren (10, 19) eines zu bohrenden Elements, wobei die Vorrichtung Folgendes umfasst:
- eine Abtriebswelle (12), die drehbar und verschiebbar entlang derselben Achse angetrieben werden kann;
- Mittel zur Befestigung (20) eines Schneidwerkzeugs (13) an der Abtriebswelle (12);
- einen Schneidmotor (14), der geeignet ist, eine Drehbewegung der Abtriebswelle (12) entlang der Achse zu bewirken;
- einen Vorschubmotor (16), der geeignet ist, eine Verschiebebewegung der Abtriebswelle (12) entlang der Achse zu bewirken;
wobei die Vorrichtung eine Steuerung (19), die programmiert ist, um die Schritte eines Verfahrens gemäß einem der Ansprüche 1 bis 9 durchzuführen, und mindestens Folgendes umfasst:
- Mittel zur Messung eines auf die Abtriebswelle (12) ausgeübten Drehmoments (22) entlang der Achse;
- Mittel zur Messung eines auf die Abtriebswelle (12) ausgeübten Schubs (23) entlang der Achse;
- Mittel zum Vergleich des Drehmoments mit einem vorbestimmten Drehmomentschwellenwert (C)
- Mittel zum Vergleich des Schubs mit einem vorbestimmten Schubschwellenwert (P);
- Mittel zur Anpassung der Regelung der Motoren (14, 16), wobei die Mittel zur Anpassung so konfiguriert sind, dass sie Folgendes bewirken:
- die Schneidmotoren (14) und die Vorschubmotoren (16) drehzahlgeregelt werden, solange das Drehmoment und der Schub unter dem Drehmomentschwellenwert (C) bzw. dem Schubschwellenwert (P) liegen;
- wenn das Drehmoment oder der Schub den Drehmomentschwellenwert (C) oder den Schubschwellenwert (P) erreicht oder überschreitet, wird der Motor, der das Drehmoment oder den Schub erzeugt, dessen Schwellenwert überschritten wird, stromgeregelt, wobei der andere Motor so drehzahlgeregelt bleibt, dass der Vorschub pro Umdrehung des Schneidwerkzeugs einem vorbestimmten Wert (ATR) entspricht.

11. Bohrvorrichtung gemäß dem Anspruch 10, wobei die Mittel zur Anpassung der Regelung, wenn einer der Motoren stromgeregelt wird, so konfiguriert sind, dass sie einen Sollwert der Drehfrequenz des drehzahlgeregelten Motors in Abhängigkeit von der Drehfrequenz des stromgeregelten Motors bestimmen.

12. Bohrvorrichtung gemäß dem Anspruch 10 oder 11, wobei der Schneidmotor (14) und der Vorschubmotor (16) anfänglich gemäß den anfänglichen Drehfrequenzen drehzahlgeregelt werden.

13. Bohrvorrichtung gemäß einem der Ansprüche 10 bis 12, wobei, wenn das Drehmoment den Drehmomentschwellenwert (C) erreicht, die Mittel zur Anpassung der Regelung so konfiguriert sind, dass:
- sie den Schneidmotor (14) stromregeln, so dass das Drehmoment den Drehmomentschwellenwert (C) nicht überschreitet;
- sie eine neue Drehfrequenz (N") des Schneidmotors (14) messen;
- eine neue Drehfrequenz (V") des Vorschubmotors (16) bestimmen, so dass der Vorschub pro Umdrehung des Schneidwerkzeugs (13) gleich dem vorbestimmten Wert (ATR) ist;
- den Vorschubmotor (16) so regeln, dass er mit der neuen Drehfrequenz (V") angetrieben wird.

14. Bohrvorrichtung gemäß einem der Ansprüche 10 bis 13, wobei, wenn der Schub den Schubschwellenwert (P) erreicht, die Mittel zur Anpassung der Regelung so konfiguriert sind, dass:
- sie den Vorschubmotor (16) stromregeln, so dass der Vorschub den vorbestimmten Schubschwellenwert (P) nicht überschreitet;
- sie eine neue Drehfrequenz (V") des Vorschubmotors (16) messen;
- sie eine neue Drehfrequenz (N") des Schneidmotors (14) bestimmen, so dass der Vorschub pro Umdrehung des Schneidwerkzeugs (13) gleich dem vorbestimmten Wert (ATR) ist;
- sie den Schneidmotor (14) regeln, so dass er mit der neuen Drehfrequenz (N") angetrieben wird.

15. Bohrvorrichtung gemäß dem Anspruch 13 oder 14, wobei der vorbestimmte Vorschub pro Umdrehung (ATR) des Schneidwerkzeugs (13) wie folgt ist:
- konstant oder
- bestimmt in Abhängigkeit von der Drehfrequenz des Schneidwerkzeugs (13) und/oder der Eingriffstiefe des Schneidwerkzeugs (13).

16. Bohrvorrichtung gemäß einem der Ansprüche 13 bis 15, wobei die Vorrichtung für Folgendes konfiguriert ist:
- Messen und Speichern neuer Drehfrequenzen des Schneidmotors (14) und/oder des Vorschubmotors (16) in Echtzeit in Abhängigkeit von der Zeit, oder
- Messen und Speichern eines von dem Schneidmotor (14) und/oder dem Vorschubmotor (16) verbrauchten Stroms in Echtzeit in Abhängigkeit von der Zeit;
- Vergleichen der so erhaltenen Aufzeichnungen mit vorbestimmten Variationskurven in Abhängigkeit von der Zeit der Drehfrequenz des Schneidmotors (14) und/oder des Vorschubmotors (16) oder des von dem Schneidmotor (14) und/oder dem Vorschubmotor (16) verbrauchten Stroms, wobei die vorbestimmten Kurven vorbestimmten Ereignissen und Ereignisarten entsprechen;
- Ableiten des Eintretens eines Ereignisses und dessen Art aus diesem Vergleich.

17. Bohrvorrichtung gemäß dem Anspruch 16, wobei die Art zur Gruppe gehört, die Folgendes umfasst:
- einen Eingang des Schneidwerkzeugs (13) in das zu bohrende Element;
- einen Ausgang des Schneidwerkzeugs (13) aus dem zu bohrenden Element;
- das Eindringen des Schneidwerkzeugs (13) in ein neues Material, wobei das zu bohrende Element Stapel aus mindestens zwei verschiedenen Materialien umfasst;
- ein Spanstau in einem Loch während des Bohrens.

18. Bohrvorrichtung gemäß einem der Ansprüche 10 bis 17, die Mittel zur regulieren der Drehzahl oder Strom der Motoren (14, 16) umfasst, wobei die Mittel zur regulieren eine Vektorregelung umsetzen.

19. Computerprogramm, umfassend Programmcode-Anweisungen zur Ausführung der Schritte des Bohrverfahrens gemäß einem der Ansprüche 1 bis 9 unter Verwendung einer Bohrvorrichtung gemäß einem der Ansprüche 10 bis 18, wenn das Programm von einem Prozessor ausgeführt wird.

20. Computerlesbares Speichermedium, auf dem ein Computerprogramm gemäß dem Anspruch 19 gespeichert ist.

## Claims

1. Drilling method of an element to be drilled by means of a cutting tool (13) capable of being driven in rotation and in translation according to the same axis by a drilling device (10, 19), said device comprising:
- °a cutting motor (14) capable of imparting a rotational movement on said cutting tool (13) about said axis;
- °a feed motor (16) capable of inducing a translational movement of said cutting tool (13) along said axis;
said method comprising at least:
- °a step (32) of measuring a torque applied to said cutting tool (13) about said axis;
- °a step (33) of measuring a thrust applied to said cutting tool (13) along said axis;
- °a step (34) of comparing said torque to a predetermined torque threshold (C);
- °a step (35) of comparing said thrust to a predetermined thrust threshold (P);
- °a step (36) of adapting the regulation of said motors, said step (36) of adapting causing:
- °said cutting (14) and feed (16) motors to be speed-regulated as long as said torque and said thrust are lower than said torque threshold (C) and said thrust threshold (P), respectively;
the method being **characterised in that**
- °when said torque or said thrust reaches or exceeds said torque (C) or thrust (P) threshold, the motor generating the torque or thrust whose threshold is exceeded is current-regulated, the other motor remaining speed-regulated such that the feed per revolution of said cutting tool (13) is equal to a predetermined value (ATR).

2. Drilling method according to claim 1, wherein said step (36) of adapting the regulation, when one of the motors is current-regulated, comprises a step (364, 369) of determining a rotational frequency setpoint of said speed-regulated motor as a function of the rotational frequency of said current-regulated motor.

3. Drilling method according to claim 1 or 2, wherein said cutting (14) and feed (16) motors are initially speed-regulated according to initial rotation frequencies.

4. Drilling method according to any one of claims 1 to 3 wherein, when said torque reaches said torque threshold (C), said step (36) of adapting said regulation comprises the following first sub-steps:
- °current regulation (362) of said cutting motor (14) such that said torque does not exceed said torque threshold (C);
- °measuring (363) a new rotational frequency (N") of said cutting motor (14);
- °determining (364) a new rotational frequency (V") of said feed motor (16) such that the feed per revolution of said cutting tool (13) is equal to said predetermined value (ATR);
- °regulating (365) said feed motor (16) so that it is driven at said new rotational frequency (V").

5. Drilling method according to any one of claims 1 to 4, wherein, when said thrust reaches said thrust threshold (P), said step (36) of adapting said regulation comprises the following second sub-steps:
- °current regulation of said feed motor (16) such that said thrust does not exceed said predetermined thrust threshold (P);
- °measuring (368) a new rotational frequency (V") of said feed motor (16);
- °determining (369) a new frequency (N") of rotation of said cutting motor (14) such that the feed per revolution of said cutting tool (13) is equal to said predetermined value (ATR);
- °regulating (370) said cutting motor (14) so that it is driven at said new rotational frequency (N").

6. Drilling method according to claim 4 or 5, wherein said predetermined feed per revolution (ATR) of said cutting tool (13) is:
- °constant or
- °determined according to the rotation frequency of said cutting tool (13) and/or the engagement depth of said cutting tool (13).

7. Drilling method according to any one of claims 4 to 6, said method comprising steps of:
- °measuring and recording in real-time new rotational frequencies of said cutting motor (14) and/or feed motor (16) as a function of time, or
- °measuring and recording in real time a current consumed by said cutting motor (14) and/or feed (16) motor as a function of time;
- °comparing the recordings thus obtained to predetermined curves of variation as a function of time of the rotation frequency of said cutting motor (14) and/or feed motor (16) or of a current consumed by said cutting motor (14) and/or feed motor (16), said predetermined curves corresponding to predetermined events and types of events;
- °deducing from this comparison the occurrence of an event and its nature.

8. Drilling method according to claim 7, wherein said nature belongs to the group comprising:
- °an entry of said cutting tool (13) into said element to be drilled
- °an exit of said cutting tool (13) from said element to be drilled,
- °passing said cutting tool (13) through a new material, said element to be drilled comprising a stack of at least two different materials;
- °chip jamming in a hole being drilled.

9. Drilling method according to any one of claims 1 to 8, wherein said motors are speed or current regulated by implementing a vector regulation.

10. Drilling device (10, 19) for an element to be drilled, said device comprising:
- °an output shaft (12) capable of being driven in rotation and in translation according the same axis;
- °means for securing (20) a cutting tool (13) to said output shaft (12);
- °a cutting motor (14) capable of imparting a rotational movement on said output shaft (12) about said axis;
- °an feed motor (16) capable of inducing a translational movement of said output shaft (12) along said axis;
said device comprising a controller (19) programmed to perform the steps of a method according to any one of claims 1 to 9, and at least:
- °means for measuring a torque (22) applied to said output shaft (12) about said axis;
- °means for measuring a thrust (23) applied to said output shaft (12) along said axis;
- °means for comparing said torque to a predetermined torque threshold (C)
- °means for comparing said thrust to a predetermined thrust threshold (P);
- °means for adapting the regulation of said motors (14, 16), said means for adapting being configured to cause:
- °said cutting (14) and feed motors (16) to be speed-regulated as long as said torque and said thrust are lower than said torque threshold (C) and said thrust threshold (P), respectively;
- °when said torque or said thrust reaches or exceeds said torque (C) or thrust (P) threshold, the motor generating the torque or thrust whose threshold is exceeded is current regulated, the other motor remaining speed-regulated such that the feed per revolution of said cutting tool is equal to a predetermined value (ATR).

11. Drilling device according to claim 10, wherein said means for adapting the regulation, when one of the motors is current-regulated, are configured to determine a rotational frequency setpoint of said speed-regulated motor as a function of the rotational frequency of said current-regulated motor.

12. Drilling device according to claim 10 or 11, wherein said cutting (14) and feed (16) motors are initially speed-regulated as a function of initial rotation frequencies.

13. Drilling device according to any one of claims 10 to 12, wherein, when said torque reaches said torque threshold (C), said means for adapting said regulation are configured to:
- °current-regulate said cutting motor (14) such that said torque does not exceed said torque threshold (C);
- °measure a new rotation frequency (N") of said cutting motor (14);
- °determine a new rotational frequency (V") of said feed motor (16) such that the feed per revolution of said cutting tool (13) is equal to said predetermined value (ATR);
- °regulate said feed motor (16) so that it is driven at said new rotational frequency (V").

14. Drilling device according to any one of claims 10 to 13, wherein, when said thrust reaches said thrust threshold (P), said means for adapting said regulation are configured to:
- °current-regulate said feed motor (16) such that said thrust does not exceed said predetermined thrust threshold (P);
- °measure a new rotational frequency (V") of said feed motor (16);
- °determine a new rotational frequency (N") of said cutting motor (14) such that the feed per revolution of said cutting tool (13) is equal to said predetermined value (ATR);
- °regulate said cutting motor (14) so that it is driven at said new rotation frequency (N").

15. Drilling device according to claim 13 or 14, wherein said predetermined feed per revolution (ATR) of said cutting tool (13) is:
- constant or
- °determined according to the rotation frequency of said cutting tool (13) and/or the engagement depth of said cutting tool (13).

16. Drilling device according to any one of claims 13 to 15, said device being configured to:
- °measure and record in real-time new rotational frequencies of said cutting motor (14) and/or feed motor (16) as a function of time, or
- °measure and record in real-time a current consumed by said cutting (14) motor and/or feed (16) motor as a function of time;
- °compare the recordings thus obtained to predetermined curves of variation as a function of time of the rotational frequency of said cutting motor (14) and/or feed (16) motor or of a current consumed by said cutting motor (14) and/or feed (16) motor, said predetermined curves corresponding to predetermined events and natures of events;
- °deduce from this comparison the occurrence of an event and its nature.

17. Drilling device according to claim 16, wherein said nature belongs to the group comprising:
- °an entry of said cutting tool (13) into said element to be drilled;
- °an exit of said cutting tool (13) from said element to be drilled;
- °passing said cutting tool (13) through a new material, said element to be drilled comprising a stack of at least two different materials;
- °chip jamming in a hole being drilled.

18. Drilling device according to any one of claims 10 to 17, comprising means for regulating speed or current of said motors (14, 16), said means for regulating implementing vector regulation.

19. Computer program including program code instructions for executing the steps of the drilling method according to any one of claims 1 to 9 by means of a drilling device according to any one of claims 10 to 18, when said program is executed by a processor.

20. Computer-readable recording medium, on which a computer program according to claim 19 is recorded.
